# EUROPÄISCHE PATENTSCHRIFT

(11) **EP 1 428 993 B1**
(45) Veröffentlichungstag und Bekanntmachung des Hinweises auf die Patenterteilung: **02.11.2006**
(21) Anmeldenummer: 04005266.4
(22) Anmeldetag: 17.09.1998
(51) Int. Cl.: F01N 3/20, F02D 41/02

(54) **Verfahren zum Betrieb eines mehrzylindrigen Verbrennungsmotors**
Method for operating a multi-cylinder internal combustion engine
Procédé pour le fonctionnement d'un moteur à combustion interne multi-cylindrique

(30) Priorität: 29.10.1997 DE 19747671
(43) Veröffentlichungstag der Anmeldung: 16.06.2004
(62) Teilanmeldung aus: 98117610.0
(73) Patentinhaber: DaimlerChrysler AG, 70567 Stuttgart (DE)
(72) Erfinder: Boegner, Walter, 71686 Remseck (DE); Duvinage, Frank, Dr., 73230 Kirchheim (DE); Friess, Walter, 70597 Stuttgart (DE); Haak, Karl-Ernst, Dr., 73669 Lichtenwald (DE); Krutzsch, Bernd, Dr., 73770 Denkendorf (DE); Maly, Rudolf, Dr., 71065 Sindelfingen (DE); Pfeffer, Viktor, 73760 Ostfildern (DE); Pischinger, Stefan, Prof., 52076 Aachen (DE); Renner, Georg, Dr., 70619 Stuttgart (DE); Voigtländer, Dirk, Dr., 70825 Korntal-Muenchingen (DE); Weibel, Michael, Dr., 70619 Stuttgart (DE); Wenninger, Günter, 70599 Stuttgart (DE); Wirbeleit, Friedrich, Dr., 73733 Esslingen (DE)

(56) Entgegenhaltungen:
- WO-A-95/15431
- GB-A- 2 277 126
- US-A- 5 497 620
- US-A- 5 580 535
- US-A- 5 657 625
- PATENT ABSTRACTS OF JAPAN vol. 018, no. 360 (M-1634), 7. Juli 1994 (1994-07-07) & JP 06 093842 A (TOYOTA MOTOR CORP), 5. April 1994 (1994-04-05)

## Beschreibung

Die Erfindung bezieht sich auf ein Verfahren zum Betrieb eines mehrzylindrigen Verbrennungsmotors mit wenigstens einem Adsorberkatalysator im Abgasstrang des Verbrennungsmotors, wobei der Adsorberkatalysator periodisch wechselnd im Adsorptions- und Desorptionsbetrieb betrieben wird. Speziell bezieht sich die Erfindung auf solche Verfahren, bei denen des weiteren das den Adsorberkatalysator im Desorptionsbetrieb verlassende Abgas zur Eingangsseite des Verbrennungsmotors rückgeführt wird und/oder das Abgas vor Eintritt in den Adsorberkatalysator durch einen vorgeschalteten Oxidationskatalysator hindurchgeführt wird.

Ein Verfahren der eingangs genannten Art ist aus der Offenlegungsschrift DE 195 17 168 A1 bekannt. Dabei wird ein NOx-Adsorptionskatalysator abwechselnd im Adsorptions- und im Desorptionsbetrieb betrieben, wobei im Desorptionsbetrieb des NOx-Adsorptionskatalysators im Verbrennungsmotor eine unvollständige Verbrennung erzeugt wird. Dazu ist eine Abgasrückführung in den Ansaugkrümmer des Verbrennungsmotors vorgesehen, die geeignet ist, die Verbrennungstemperatur im Motor zu reduzieren und/oder die Wahrscheinlichkeit von Zündaussetzern im Motor zu erhöhen. Durch eine derartige Abgasrückführung sowie ggf. durch weitere Maßnahmen, insbesondere eine Verzögerung des Zündzeitpunktes, eine Abmagerung des Luft/Kraftstoff-Gemisches im Motor oder ein intermittierendes Hemmen der Zündung in allen oder einzelnen Zylindern, wird der Verbrennungszustand in einem mit Fremdzündung arbeitenden Verbrennungsmotor verschlechtert, so dass nicht vollständig verbrannte Kraftstoffbestandteile in das Abgas des Verbrennungsmotors gelangen und im NOx-Adsorptionskatalysator eine ausreichende Desorption und Reduzierung der gespeicherten Stickoxide während des Desorptionsbetriebes ermöglichen.

Aus der Offenlegungsschrift DE 195 22 165 A1 ist ein Verfahren zum Betrieb eines Verbrennungsmotors mit einem NOx-Adsorptionskatalysator bekannt, bei dem eine vorübergehende Erwärmung des NOx-Adsorptionskatalysators über die normale Betriebstemperatur hinaus zur Entfernung von Verunreinigungen vorgesehen ist. Dazu wird eine Erhöhung der Abgastemperatur durch motorinterne Maßnahmen vorgeschlagen, wobei insbesondere Kraftstoff im Abgastrakt nachverbrannt werden soll, indem sowohl unverbrannter Kraftstoff als auch überschüssige Luft in das Abgas des Verbrennungsmotors gebracht werden. Dies wird zum einen durch eine unvollständige Verbrennung in einem Teil der Motorzylinder sowie eine Verbrennung mit Luftüberschuss in einem anderen Teil der Motorzylinder erreicht. Ferner wird eine Verzögerung des Zündzeitpunktes bei gleichzeitiger Erhöhung der Ansaugluftmenge vorgeschlagen, wodurch sich ebenfalls eine Erhöhung der Abgastemperatur durch eine Nachverbrennung im Abgastrakt ergibt. Überdies wird ein angefetteter Betrieb des Motors bei gleichzeitiger Zufuhr von Sekundärluft zum NOx-Adsorptionskatalysator mit gleicher Wirkung vorgeschlagen.

Aus der Patentschrift DE 43 19 294 Cl ist ein Verfahren zur Reduzierung von Stickoxiden im Abgas einer Brennkraftmaschine bekannt, bei dem ein NOx-Adsorptionskatalysator periodisch wechselnd im Adsorptions- und im Desorptionsbetrieb betrieben und das den im Desorptionsbetrieb arbeitenden Adsorptionskatalysator verlassende Abgas in die Ansaugluft der Brennkraftmaschine rezirkuliert wird, wobei speziell zwei parallel geschaltete Katalysatoren Anwendung finden können, die wechselweise im Adsorptions- und im Desorptionsbetrieb betrieben werden. Die im rückgeführten Abgas enthaltenen Stickoxide werden in der Brennkraftmaschine umgesetzt, die deshalb kontinuierlich mit vollständiger Verbrennung betrieben werden kann.

Dokument WO 95/15431 A offenbart ein Verfahren mit den Merkmalen des Oberbegriffs des Anspruchs 1.

Aufgabe der Erfindung ist die Bereitstellung eines Verfahrens der eingangs genannten Art, das mit möglichst einfachen Mitteln eine verbesserte Abgasreinigung bei möglichst geringer Beeinträchtigung des Motorbetriebs gewährleistet.

Dieses Problem wird durch Verfahren mit den Merkmalen des kennzeichnenden Teils des Anspruchs 1 gelöst.

Bei dem Verfahren erfolgt speziell eine Abgasrückführung nur in einen Teil der Zylinder des Verbrennungsmotors, der während einer jeweiligen Katalysatordesorpionsphase in einem Zustand unvollständiger Verbrennung betrieben wird, wobei in diesem Teil der Zylinder eine günstige Atmosphäre für eine Umsetzung desorbierter Stickoxide gegeben ist. Dabei wird gleichzeitig Abgas erzeugt, das wiederum die Desorption von Stickoxiden und ggf. anderen adsorbierten Stoffen in dem Adsorberkatalysator begünstigt. Derartige thermodynamisch eher ungünstige Bedingungen bleiben auf diesen Teil der Zylinder des Verbrennungsmotors beschränkt, während der andere Teil mit vollständiger Verbrennung betrieben werden kann und somit ein relativ hoher Wirkungsgrad des Gesamtmotors ermöglicht wird.

Bei dem Verfahren wird speziell ein dem Adsorptionskatalysator vorgeschalteter Oxidationskatalysator zur Aufbereitung des zugeführten Abgases genutzt, wobei mit Hilfe einer fetten Nachverbrennung im Oxidationskatalysator, bei der nicht vollständig oxidierte Abgasbestandteile erzeugt werden, günstige Bedingungen für die Desorption im Adsorberkatalysator geschaffen werden. Dabei wird der Oxidationskatalysator während kurzer Regenerationsphasen mit erhöhter Temperatur betrieben, wodurch Ruß, Partikel oder Kohlenwasserstoffe, die sich zuvor auf dem Oxidationskatalysator niedergeschlagen haben könnten, entfernt werden. Die Regeneration des Oxidationskatalysators kann entweder während des Adsorptionsoder des Desorptionsbetriebs des nachgeschalteten Adsorberkatalysators erfolgen, je nachdem, welche Stoffe bei der Regeneration des Oxidationskatalysators freigesetzt werden.

Bei einem weitergebildeten Verfahren wird der Desorptionsvorgang im Adsorberkatalysator durch die Zufuhr von stickoxidarmem Abgas begünstigt, das aus dem in die Abgasrückführung einbezogenen Teil der Zylinder des Verbrennungsmotors stammt, der gezielt an diesen Vorgang anpassbar ist.

Bei einem weitergebildeten Verfahren wird das Abgas der nicht mit rückgeführtem Abgas beaufschlagten Zylinder und ggf. restliches Abgas aus dem anderen Teil der Zylinder, der im Zustand unvollständiger Verbrennung betrieben wird, dem momentan adsorbierenden Adsorberkatalysator zugeführt, so dass es bestmöglich gereinigt an die Umgebung abgegeben wird.

Bei weitergebildeten Verfahren wird eine gegenüber dem Normalbetrieb erhöhte Abgastemperatur durch motorinterne Maßnahmen erreicht, die je nach Bedarf bei allen, meist aber nur bei einem Teil der Zylinder des Verbrennungsmotors bewirkt werden müssen. Die genannten Motorsteuerungsmaßnahmen sind kurzfristig gezielt einsetzbar, wobei eine Beschränkung auf einen Teil der Zylinder zu einer geringeren Beeinträchtigung von Leistung und Motorwirkungsgrad führt. Ferner ist damit die Erhöhung der Abgastemperatur genauer regel- und steuerbar.

Bevorzugte Ausführungsbeispiele der Erfindung sind in den Zeichnungen dargestellt und werden nachfolgend beschrieben. Hierzu zeigen:
- Fig. 1: ein Blockdiagramm eines nach einem ersten Verfahrensbeispiel betreibbaren mehrzylindrigen Kraftfahrzeugverbrennungsmotors mit zugehöriger Abgasreinigungsanlage und
- Fig. 2: ein Blockdiagramm eines nach einem zweiten Verfahrensbeispiel betreibbaren mehrzylindrigen Kraftfahrzeugverbrennungsmotors mit zugehöriger Abgasreinigungsanlage.

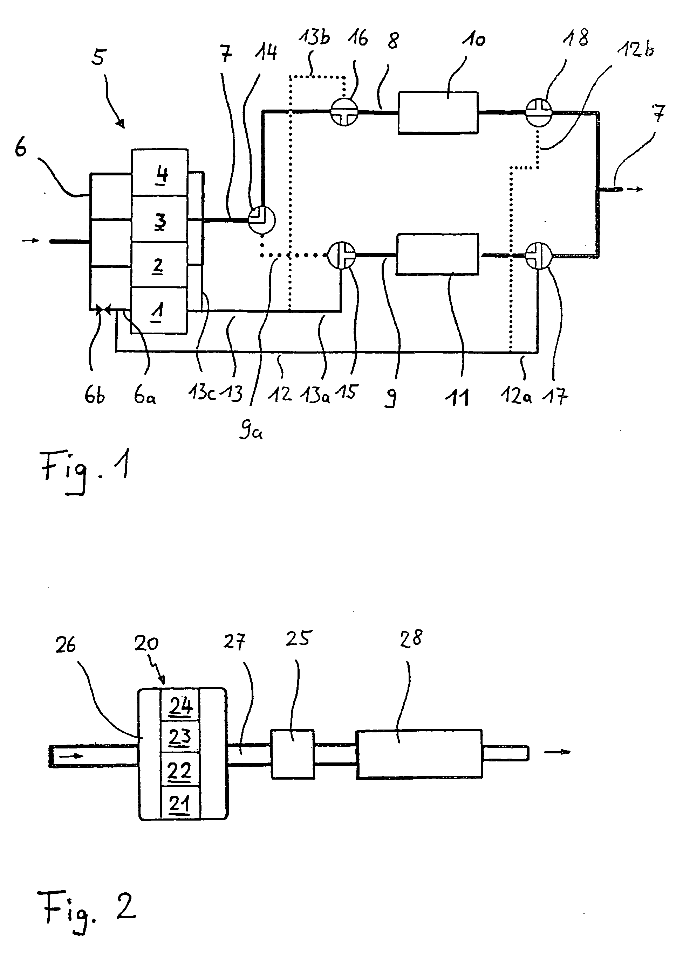

In Fig. 1 ist ein nach einem ersten erfindungsgemäßen Verfahren betreibbarer Kraftfahrzeugverbrennungsmotor in Form eines Hubkolbenmotors 5 dargestellt, der insgesamt vier Zylinder 1 bis 4 aufweist. Dem Hubkolbenmotor 5 ist ein Abgastrakt zugeordnet, der eine sich in einen rechten und einen linken Teilstrang 8, 9 verzweigende Hauptabgasleitung 7, eine Nebenabgasleitung 13, zwei NOx-Adsorberkatalysatoren 10, 11 und mehrere Schaltventile 14 bis 18 umfasst. Der Hubkolbenmotor 5 erhält seine Verbrennungsluft durch den Ansaugkrümmer 6, der insbesondere einen Lufteinlasskanal 6a mit einer Drosselklappe 6b aufweist, der speziell dem Zylinder 1 zugeordnet ist. Zwischen der Drosselklappe 6b und dem Lufteinlass des Zylinders 1 mündet eine Abgasrückführungsleitung 12 in den Lufteinlasskanal 6a.

Im normalen Leistungsbetrieb des Hubkolbenmotors 5 stoßen die Zylinder 1 bis 4 mit Schadstoffen wie CO, NOx oder Kohlenwasserstoffen belastetes Abgas aus, das über einen der herkömmlich gebauten NOx-Adsorberkatalysatoren 10, 11 geleitet wird.

In Fig. 1 ist der NOx-Adsorberkatalysator 20 im Adsorptionsbetrieb dargestellt, der mit dem Abgas des Hubkolbenmotors 5 beaufschlagt wird, das den Adsorberkatalysator 10 über den rechten Teilstrang 8 der Hauptabgasleitung 7 erreicht. Die Schaltventile 14, 16, 18 befinden sich dabei in der in Fig. 1 dargestellten Position, so dass das gereinigte Abgas aus dem Katalysator 10 über den rechten Teilstrang 8 und die Hauptabgasleitung 7 weiteren Abgasreinigungsvorrichtungen oder direkt der Umgebungsluft zugeleitet werden kann.

Der zweite NOx-Adsorberkatalysator 11 wird während der Adsorptionsphase des Adsorberkatalysators 10 nach einem erfindungsgemäßen Verfahren im Desorptionsbetrieb betrieben. Dazu wird ein Teil des Verbrennungsabgases des Zylinders 1 über die Nebenabgasleitung 13, einen Leitungszweig 13a und den linken Teilstrang 9 der Hauptabgasleitung dem Adsorberkatalysator 11 zugeführt, wobei der Zylinder 1 derart betrieben wird, dass er stickoxid- und sauerstoffarmes sowie mit teiloxidierten Bestandteilen versehenes Abgas erzeugt, das für den Desorptionsvorgang im Adsorberkatalysator 11 besonders geeignet ist. Die Schaltventile 15 und 17 werden in ihre in Fig. 1 dargestellte Position gestellt, so dass zum einen der Adsorberkatalysator 11 ausschließlich mit dem Abgas des Zylinders 1 beaufschlagt wird, und zum anderen das aus dem Adsorberkatalysator 11 austretende Abgas über einen Leitungszweig 12a und die Abgasrückführungsleitung 12 in den Lufteinlasskanal 6a des Zylinders 1 rezirkuliert wird. Dabei wird ferner die Ansaugluft des Zylinders 1 mit Hilfe der Drosselklappe 6b gedrosselt und die Kraftstoffzufuhr des Zylinders 1 in Abhängigkeit von der Luftzusammensetzung im Zylinder 1 eingestellt.

Darüber hinaus wird der Verbrennungsablauf im Zylinder 1 eines nach dem Dieselprinzip betriebenen Hubkolbenmotors 5 insbesondere durch eine optimale Kraftstoffeinspritzung derart betrieben, dass unter Vermeidung erhöhter Rußbildung die Stickoxidemissionen der Verbrennung im Zylinder 1 möglichst minimiert werden. Dazu ist eine geeignete Einspritzstrategie mit Vor-, Haupt- und Nacheinspritzung zu wählen, wobei die Einspritzzeitpunkte variabel anpassbar sind. Ferner kann vorgesehen werden, Kraftstoff in den Saughub des Zylinders einzuspritzen und/oder den Zylinder 1 mit einem Luft/Kraftstoffverhältnis λ ≤ 1 zu betreiben.

Durch die vorgeschlagene Anordnung wird sichergestellt, dass das einer weiteren Abgasbehandlungseinrichtung oder der Umgebungsluft zuzuführende Abgas vollständig durch den im Adsorptionsbetrieb arbeitenden Adsorberkatalysator 10 geleitet wird, wobei derjenige Teil des Abgases des Zylinders I, der über einen Leitungszweig 13c in die Hauptabgasleitung 7 gelangt, im Vergleich zum Hauptabgasstrom nur so groß ist, dass dort die Bedingungen, die für einen Adsorptionsbetrieb im Adsorberkatalysator 10 erforderlich sind, eingehalten werden. Dies wird insbesondere auch dadurch sichergestellt, dass die Zylinder 2, 3, 4 bei einem Betrieb nach dem Dieselprinzip naturgemäß bei einem Luft-/Kraftstoffverhältnis betrieben werden, das deutlich größer als eins ist. Der unveränderte Betrieb der Zylinder 2, 3, 4 stellt sicher, dass Leistung und Wirkungsgrad des Gesamtmotors von den Maßnahmen für den Desorptionsbetrieb des Adsorptionskatalysators 11 möglichst wenig beeinflusst werden.

Um die beiden NOx-Adsorptionskatalysatoren 10, 11 abwechselnd im Adsorptions- und im Desorptionsbetrieb zu betreiben, besteht durch eine entsprechende Umschaltung der Schaltventile 14 bis 18 die Möglichkeit, ausgehend von der Situation in Fig. 1, den Adsorberkatalysator 11 auf Adsorptionsbetrieb und den Adsorberkatalysator 10 gleichzeitig auf Desorptionsbetrieb umzuschalten. Dazu wird der Hauptabgasstrom über die Hauptabgasleitung 7, einen Leitungszweig 9a und den linken Teilstrang 9 dem Adsorberkatalysator 11 zugeleitet, während der Adsorberkatalysator 10 über die Nebenabgasleitung 13, einen punktiert gezeichneten Leitungszweig 13b und den rechten Teilstrang 8 mit dem Abgas des Zylinders 1 beaufschlagt wird. In diesem Fall wird das aus dem Adsorberkatalysator 10 austretende Abgas vollständig über die Abgasrückführungsleitungen 12b und 12 zum Zylinder 1 zurückgeführt.

Wird der Hubkolbenmotor 5 nach dem Ottoprinzip betrieben, kann während der Desorptionsphase des Adsorberkatalysators 11 in dem Zylinder 1 ein zur Stickoxidminderung besonders günstiges Luftverhältnis weitgehend fest eingestellt werden, so dass die Desorption in dem Adsorberkatalysator 11 bei näherungsweise konstanten Bedingungen erfolgen kann, wobei ein Luft-/Kraftstoffverhältnis von λ > l in den Zylindern 2 bis 4 zu bevorzugen ist. Dadurch ergibt sich im Hauptabgasstrom ein ausreichender Restsauerstoffgehalt, der für die Adsorption im Adsorberkatalysator 10 günstig ist.

In einem modifizierten Ausführungsbeispiel erfolgt die Abgasrückführung nicht in den Lufteinlasskanal 6a des Zylinders 1, sondern über den Ansaugkrümmer 6 in alle Zylinder gleichmäßig. In diesem Ausführungsbeispiel erfolgt somit eine Umsetzung der desorbierten Stickoxide in allen Zylindern des Hubkolbenmotors unabhängig von dessen Arbeitsprinzip, wobei weiterhin nur ein Teil der Zylinder, z.B. der Zylinder 1, derart betrieben wird, dass eine optimale Desorption im jeweils desorbierenden Adsorberkatalysator 10 bzw. 11 erreicht wird.

Ein zweites erfindungsgemäßes Verfahrensbeispiel ist für einen Verbrennungsmotor vorgesehen, der in Form eines nach dem Dieselprinzip arbeitenden Hubkolbenmotors 20 gemäß Fig. 2 ausgestaltet ist. Der Hubkolbenmotor 20 weist vier Zylinder 21 bis 24 auf, die ihr Verbrennungsgemisch über eine sogenannte Common-Rail-Einspritzanlage 26 erhalten, und in deren Hauptabgasleitung 27 ein Oxidationskatalysator 25 und ein NOx-Adsorberkatalysator 28 zur Abgasreinigung eingeschaltet sind.

Der Oxidationskatalysator ist in bekannter Weise möglichst motornah positioniert und oxidiert weitgehend unselektiv unverbrannte und teilverbrannte Bestandteile des Abgases. Der Adsorberkatalysator 28 wird in herkömmlicher Weise periodisch wechselnd im Adsorptions- und im Desorptionsbetrieb betrieben, wobei während seines Desorptionsbetriebes in dem Oxidationskatalysator 25 eine fette Nachverbrennung durchgeführt wird, bei der das Abgas des Hubkolbenmotors 20 unter Sauerstoffmangel derart nachbehandelt wird, dass eine große Menge an teiloxidierten Bestandteilen im Abgas erzeugt wird, so dass im Adsorberkatalysator 28 anschließend eine für die Desorption und die parallel ablaufende Reduktion von Stickoxiden geeignete Atmosphäre zur Verfügung gestellt wird.

Hierzu ist vorgesehen, bei einem Teil der Zylinder 21 bis 24 des Hubkolbenmotors 20 eine Kraftstoffzusatzeinspritzung vorzunehmen. Eine derartige Kraftstoffzusatzeinspritzung kann während des Saughubes in den Ansaugtrakt beliebiger Zylinder erfolgen, es ist jedoch auch eine Erhöhung der regulären Einspritzmenge oder eine späte Nacheinspritzung in den Brennraum einzelner Zylinder möglich. Durch derartige Maßnahmen wird erreicht, dass eine ausreichende Menge an unverbrannten oder teilverbrannten Kraftstoffanteilen in das Abgas gelangt, so dass im Oxidationskatalysator 25 die genannte fette Nachverbrennung stattfinden kann. Da eine derartige Verbrennungsführung in dem Dieselmotor 20 im allgemeinen eine erhöhte Ruß- und Partikelemission zur Folge hat, sind entsprechende Ablagerungen im Oxidationskatalysator 25 zu erwarten. Da derartige Ablagerungen wiederum die Funktion des Oxidationskatalysators 25 beeinträchtigen, sind kurze Regenerationsphasen für den Oxidationskatalysator vorgesehen, während denen die Ablagerungen entfernt werden. Dazu ist vorgesehen, den Oxidationskatalysator 25 mit einem Abgas zu beaufschlagen, dessen Temperatur auf 500° C bis etwa 800° C erhöht ist. Derartige Regenerationsphasen dauern für eine geeignete Regeneration etwa 0,5s bis 10s.

Erfindungsgemäß ist für die Abgastemperaturerhöhung das Einspritzen einer zusätzlichen Kraftstoffmenge in einer späten Verbrennungsphase eines Zylinders vorgesehen. Darüber hinaus dienen auch ein früheres Öffnen des Auslassventils eines Zylinders und das Verstellen des Spritzbeginns der Haupteinspritzung hin zu einem späteren Zeitpunkt während des Arbeitstaktes eines Zylinders zu einer Abgastemperaturerhöhung. Die genannten Maßnahmen können sowohl in einem als auch in mehreren Zylindern des Hubkolbenmotors 20 durchgeführt werden, während die übrigen Zylinder unverändert weiterbetrieben werden. Durch die genannten Maßnahmen lässt sich die Abgastemperatur kurzzeitig sehr genau einstellen, so dass die Leistung des Gesamtmotors möglichst wenig beeinträchtigt wird.
Eine derartige Regenerationsphase des Oxidationskatalysators 25 kann sowohl während des Desorptionsbetriebes als auch während des Adsorptionsbetriebes des Adsorberkatalysators 28 erfolgen, wobei im erstgenannten Fall die genannten Motorsteuerungsmaßnahmen für einen oder mehrere Zylinder ggf. in Kombination vorgesehen werden.

## Patentansprüche

1. Verfahren zum Betrieb eines mehrzylindrigen Verbrennungsmotors (20) mit einem Oxidationskatalysator (25) im Abgasstrang des Verbrennungsmotors (20), wobei auf dem Oxidationskatalysator (25) niedergeschlagener Ruß oder Kohlenwasserstoffe entfernt werden, indem der Oxidationskatalysator (25) während kurzer Regenerationsphasen bei einer erhöhten Abgastemperatur von etwa 500° C bis etwa 800° C betrieben wird,
**dadurch gekennzeichnet, dass**
die erhöhte Abgastemperatur durch Ergreifen einer auf wenigstens einen Motorzylinder einwirkenden motorinternen Maßnahme erreicht wird, und der Verbrennungsmotor (20) in der Regenerationsphase mit einem Luft-Kraftstoffverhältnis betrieben wird, welches größer als eins ist.

2. Verfahren nach Anspruch 1,
**dadurch gekennzeichnet, dass**
während der Regenerationsphasen des Oxidationskatalysators (25) die Erhöhung der Abgastemperatur gegenüber dem Normalbetrieb durch Einspritzen einer zusätzlichen Kraftstoffmenge in einer späten Verbrennungsphase, früheres Öffnen des Auslassventils und/oder verstellen des Spritzbeginns der Haupteinspritzung in Richtung spät und/oder Erhöhung der regulären Einspritzmenge bewirkt wird.

3. Verfahren nach Anspruch 1 oder 2
**dadurch gekennzeichnet, dass**
der Oxidationskatalysator (25) einer Abgasreinigungseinheit vorgeschaltet ist und die Abgasreinigungseinheit in periodisch wechselnden Betriebszustänaen betrieben wird.

4. Verfahren nach Anspruch 3
**dadurch gekennzeichnet, dass**
die Abgasreinigungseinheit als Adsorberkatalysator (28) ausgebildet ist und der Adsorberkatalysator (28) periodisch wechselnd im Adsorptions- und im Desorptionsbetrieb betrieben wird.

5. Verfahren nach Anspruch 4,
**dadurch gekennzeichnet, dass**
während des Desorpzionsbetriebs des Adsorberkatalysators (28) im Oxidationskatalysator (25) eine insbesondere fette Nachverbrennung durchgeführt wird.

## Claims

1. Method for operating a multi-cylinder internal combustion engine (20) with an oxidation catalyst (25) in the exhaust gas system of the internal combustion engine (20), wherein soot or hydrocarbons deposited on the oxidation catalyst (25) are removed in that the oxidation catalyst (25) is operated during short regeneration phases at an increased exhaust gas temperature of around 500°C to around 800°C,
**characterised in that**
the increased exhaust gas temperature is reached through an internal engine measure influencing at least one engine cylinder, and the internal combustion engine (20) is operated in the regeneration phase with an air / fuel ratio which is greater than one.

2. Method according to claim 1,
**characterised in that**
during the regeneration phases of the oxidation catalyst (25) the increase of the exhaust gas temperature in relation to normal operation is realised through injection of an additional amount of fuel in a late combustion phase, earlier opening of the exhaust valve and / or adjustment of the start of the main injection in the sense of a later start and / or increase in the normal injection amount.

3. Method according to claim 1 or 2,
**characterised in that**
the oxidation catalyst (25) is connected before an exhaust gas purification unit and the exhaust gas purification unit is operated in periodically changing operating states.

4. Method according to claim 3,
**characterised in that**
the exhaust gas purification unit is formed as an adsorber catalyst (28) and the adsorber catalyst (28) is operated in a periodically changing way in adsorption and in desorption operation.

5. Method according to claim 4,
**characterised in that**
during the desorption operation of the adsorber catalyst (28) in the oxidation catalyst (25) a particularly rich subsequent combustion is carried out.

## Revendications

1. Procédé pour le fonctionnement d'un moteur à combustion interne (20) à plusieurs cylindres, comportant un catalyseur d'oxydation (25) agencé dans le circuit d'échappement du moteur à combustion interne (20), dans lequel on élimine les suies ou les hydrocarbures précipités sur le catalyseur d'oxydation (25) en faisant fonctionner le catalyseur d'oxydation (25) pendant de courtes phases de régénération à une température accrue des gaz d'échappement d'environ 500 °C à environ 800 °C,
**caractérisé en ce que** la température accrue des gaz d'échappement est atteinte par intervention d'un dispositif interne au moteur et agissant sur au moins un cylindre du moteur, et **en ce que**, pendant la phase de régénération, le moteur à combustion interne (20) fonctionne avec un rapport air/carburant qui est supérieur à 1.

2. Procédé selon la revendication 1, **caractérisé en ce que** pendant les phases de régénération du catalyseur d'oxydation (25), l'augmentation de la température des gaz d'échappement par rapport au fonctionnement normal s'effectue par injection d'une quantité de carburant supplémentaire dans une phase de combustion tardive, par ouverture précoce de la soupape d'échappement et/ou par décalage du début de l'injection principale dans le sens tardif et/ou par augmentation de la quantité d'injection régulière.

3. Procédé selon la revendication 1 ou 2,
**caractérisé en ce que** le catalyseur d'oxydation (25) est monté en amont d'une unité de purification de gaz d'échappement, et **en ce que** l'unité de purification de gaz d'échappement est mise en service dans des états de fonctionnement qui changent périodiquement.

4. Procédé selon la revendication 3,
**caractérisé en ce que** l'unité de purification de gaz d'échappement est réalisée sous forme de catalyseur d'absorption (28), et **en ce que** le catalyseur d'absorption (28) est mis en service en alternance périodique en fonctionnement d'absorption et en fonctionnement de désorption.

5. Procédé selon la revendication 4,
**caractérisé en ce que** pendant le fonctionnement en désorption du catalyseur d'absorption (28) on exécute dans le catalyseur d'oxydation (25) une postcombustion, en particulier riche.
